# EUROPEAN PATENT APPLICATION

(11) **EP 1 752 498 A1**
(43) Date of publication of application: **14.02.2007**
(21) Application number: 05737101.5
(22) Date of filing: 06.05.2005
(51) Int. Cl.: C09B 67/00, A23L 1/275, C09K 15/34

(54) **METHOD OF PREVENTING FADING OF TAR COLORANT AND TAR COLORANT-CONTAINING COMPOSITION WITH PREVENTED FADING**

(30) Priority: 07.05.2004 US 568841 P
(71) Applicant: SAN-EI GEN F.F.I., INC., Toyonaka-shi, Osaka 561-8588 (JP)
(72) Inventor: KODA, Takatoshi; c/o SAN-EI GEN F.F.I.,, 5618588 (JP); MORIWAKI, Masamitsu; c/o SAN-EI GEN F.F.I.,, 5618588 (JP); TANAKA, Hisashi; c/o SAN-EI GEN F.F.I.,, 5618588 (JP); UTIDA, Kouji; c/o SAN-EI GEN F.F.I.,, 5618588 (JP)
(74) Representative: Müller-Boré & Partner Patentanwälte
(86) International application number: PCT/JP2005/008370
(87) International publication number: WO 2005/108503

(57) **Abstract**

The present invention provides a method of suppressing fading of a tar colorant. More specifically, the present invention provides a method of suppressing a tar colorant fading phenomenon that occurs specifically in compositions containing (a) the tar colorant, and (b) at least one of reducing sugars, ascorbic acid compounds, or metals. This method can be attained by mixing (c) at least one selected from the group consisting Of isoquercitrin, enzymatically modified isoquercitrin, rutin, enzymatically modified rutin, Chinese bayberry extract, and rosemary extract into such a composition, thus making the component (a), the component (b) and the component (c) coexist. The present invention further provides a composition for which fading of a tar colorant is suppressed using the above method, more specifically a composition containing at least one of reducing sugars, ascorbic acid compounds, or metals in addition to the tar colorant.

## Description

### TECHNICAL FIELD

The present invention relates to a method of suppressing fading of a tar colorant. More specifically, the present invention relates to a method of suppressing the fading phenomenon of a tar colorant that occurs specifically in a composition that contain a sugar having a reducing property (hereinafter called 'reducing sugar'), an ascorbic acid compound, and a metal in addition to the tar colorant. The present invention further relates to a composition for which fading of a tar colorant is suppressed using the above method, more specifically a composition containing a reducing sugar, an ascorbic acid compound, or a metal in addition to the tar colorant.

### BACKGROUND ART

From hitherto, synthetic colorants and natural colorants have been widely used for coloring foods/drinks. Due to a tendency for natural foods/drinks to be favored, recently the frequency of use of natural colorants as opposed to synthetic colorants has been increasing. However, natural colorants are relatively unstable, having a strong tendency to fade or discolor over time through the effects of light, oxygen, heat and so on. More research than hitherto is thus being carried out into methods of suppressing fading of natural colorants.

In contrast with this, synthetic colorants such as tar colorants are compounds that are relatively stable to light, oxygen, heat and so on. The current state of affairs is thus that there is considered to be little need to carry out research and development into methods of suppressing fading for synthetic colorants, and hence little investigation into such methods is being carried out in the industry in question.

Documents in which methods of stabilizing colorants are described include Documents 1 and 2. In the Document 1, it is disclosed that fading of a synthetic colorant or natural colorant through irradiation with light can be suppressed using an extract of a myricaceous plant. However, there is no description whatsoever in that document regarding a tar colorant fading markedly in the presence of a reducing sugar, ascorbic acid, or a metal, nor is there any suggestion that an extract of a myricaceous plant might act to suppress fading of a tar colorant under these specific conditions.

Moreover, in the Document 2, it is merely disclosed that an amino acid, a peptide, or a protein is useful in suppressing fading of a colorant in the presence of a metal ion.
Document 1: Japanese Unexamined Patent Application No. H6 (1994)-234935
Document 2: Japanese Unexamined Patent Application No. 2004-215570

### DISCLOSURE OF THE INVENTION

Upon investigating the above, the present inventors discovered that even with tar colorants (synthetic colorants) that are said to have high stability, there is a problem of marked fading, particularly under irradiation with light, among compositions containing a reducing sugar, ascorbic acid or erythorbic acid (isoascorbic acid, i.e. an isomer of ascorbic acid) or a salt or ester thereof (in the present invention, these are referred to collectively as 'ascorbic acid compound'), or a metal. The present inventors also discovered that this fading phenomenon occurs more markedly the lower the amount of the tar colorant contained in the composition, i.e. for weakly colored compositions.

In recent years, drinks packaged in transparent containers such as drinks packaged in PET bottles, and foods packaged in transparent containers so that the contents can be seen (e.g. desserts such as jellies, puddings, frozen desserts, yogurts, cakes, and so on) have become widespread. Such foods/drinks, and also various other products such as cosmetics, medicines and so on, packaged in transparent containers are often exposed to sunlight during storage or distribution and to fluorescent light while on display, and hence there can be a problem of the commercial value dropping markedly due to fading of a colorant over time. In particular, the possibility lurks of this problem becoming more serious as products are made more weakly colored.

It is an object of the present invention to provide a method of suppressing the fading phenomenon of a tar colorant, in particular the fading phenomenon of a tar colorant occurring through irradiation with light, that occurs among a composition that contain a reducing sugar, an ascorbic acid compound, or a metal in addition to the tar colorant. Furthermore, it is an object of the present invention to provide a composition, wherein the fading phenomenon of a tar colorant, in particular the fading phenomenon of a tar colorant occurring through irradiation with light, is suppressed despite the composition containing a reducing sugar, an ascorbic acid compound, or a metal in addition to the tar colorant.

The present inventors carried out assiduous studies to attain the above objects, and as a result discovered that isoquercitrin or enzyme-treated substance thereof (enzymatically modified isoquercitrin), rutin or enzyme-treated substance thereof (enzymatically modified rutin), Chinese bayberry extract, and rosemary extract are effective in suppressing fading of the tar colorant that occurs in such a composition.
I. The present invention has been accomplished based on the above finding, and relates to a method of suppressing fading of a tar colorant as follows.
   Item1. A method of suppressing fading of a tar colorant for a composition containing (a) the tar colorant, and (b) at least one selected from the group consisting of reducing sugars, ascorbic acid compounds, and metals, the method comprising:
      mixing (c) at least one selected from the group consisting of isoquercitrin, enzymatically modified isoquercitrin, rutin, enzymatically modified rutin, Chinese bayberry extract, and rosemary extract into the composition,
      thus making the component (a), the component (b) and the component (c) coexist.
   Item 2. The method according to item 1, being a method of suppressing fading of the tar colorant through irradiation with light.
   Item 3. The method according to item 1 or 2, wherein the composition is an orally-available composition.
   Item 4. The method according to any one of items 1 through 3, wherein the composition is a food/drink.
   Item 5. The method according to any one of items 1 through 4, wherein the tar colorant is at least one selected from the group consisting of Red No. 2, Red No. 40, Red No. 102, Yellow No. 4, Yellow No. 5, azorubin, Red No. 3, Red No. 104, Red No. 105, Red No. 106, Green No. 3, Blue No. 1, Blue No. 2, and Yellow No. 203.
   Item 6. The method according to any one of items 1 through 5, wherein each of the reducing sugars is fructose, glucose, arabinose, galactose, xylose, sorbose, mannose, ribose, rhamnose, kojibiose, nigerose, maltose, isomaltose, gentiobiose, laminaribiose, cellobiose, lactose, melibiose, maltotriose, panose, isomaltotriose, liquid sugar, fructose-glucose liquid sugar, invert sugar, starch syrup, honey, or maple sugar.
   Item 7. The method according to any one of items 1 through 6, wherein each of the ascorbic acid compounds is ascorbic acid, an alkali metal salt of ascorbic acid, an alkaline earth metal salt of ascorbic acid, a fatty acid ester of ascorbic acid, erythorbic acid, or an alkali metal salt of erythorbic acid.
   Item 8. The method according to any one of items 1 through 7, wherein each of the metals is iron, copper, tin, calcium, aluminum, zinc, magnesium, or lead.
   Item 9. The method according to any one of items 1 through 8, wherein the proportion of the tar colorant in the composition is 0.0001 to 0.1 % by weight.
   Item 10. The method according to any one of items 1 through 9, wherein in the composition contains a reducing sugar, the total proportion of the reducing sugar in the composition is 1 to 40 % by weight.
   Item 11. The method according to any one of items 1 through 10, wherein the composition contains an ascorbic acid compound, the total proportion of the ascorbic acid compound in the composition is 0.001 to 0.1 % by weight.
   Item 12. The method according to any one of items 1 through 11, wherein in the composition contains a metal, the total proportion of the metal in the composition is 0.0001 to 0.01 % by weight.
   Item 13. The method according to any one of items 1 through 12, wherein at least one selected from the group comprising isoquercitrin, enzymatically modified isoquercitrin, rutin, and enzymatically modified rutin is mixed in such that the total concentration thereof in the final composition is 0.0005 to 0.5 % by weight, or wherein at least one selected from the group comprising Chinese bayberry extract and rosemary extract is mixed in such that the total concentration in terms of solids thereof in the final composition is 0.0001 to 0.2 % by weight.
II. Moreover, the present invention also relates to a tar colorant-containing composition as follows, which uses effects obtained through a method as above.
   Item A. A composition containing:
      (a) a tar colorant;
      (b) at least one selected from the group consisting of reducing sugars, ascorbic acid compounds, and metals; and
      (c) at least one selected from the group consisting of isoquercitrin, enzymatically modified isoquercitrin, rutin, enzymatically modified rutin, Chinese bayberry extract, and rosemary extract.
   Item B. The composition according to item A, wherein the composition is an orally-available composition.
   ItemC. The composition according to itemAor B, wherein the composition is a food/drink.
   Item D. The composition according to any one of items A through C, wherein the tar colorant is at least one selected from the group consisting of Red No. 2, Red No. 40, Red No. 102, Yellow No. 4, Yellow No. 5, azorubin, Red No. 3, Red No. 104, Red No. 105, Red No. 106, Green No. 3, Blue No. 1, Blue No. 2, and Yellow No. 203.
   Item E. The composition according to any one of items A through D, wherein each of the reducing sugars is fructose, glucose, arabinose, galactose, xylose, sorbose, mannose, ribose, rhamnose, kojibiose, nigerose, maltose, isomaltose, gentiobiose, laminaribiose, cellobiose, lactose, melibiose, maltotriose, panose, isomaltotriose, liquid sugar, fructose-glucose liquid sugar, invert sugar, starch syrup, honey, or maple sugar.
   Item F. The composition according to any one of items A through E, wherein each of the ascorbic acid compounds is ascorbic acid, an alkali metal salt of ascorbic acid, an alkaline earth metal salt of ascorbic acid, a fatty acid ester of ascorbic acid, erythorbic acid, or an alkali metal salt of erythorbic acid.
   Item G. The composition according to any one of items A through F, wherein each of the metals is iron, copper, tin, calcium, aluminum, zinc, magnesium, or lead.
   Item H. The composition according to any one of items A through G, containing the tar colorant in a proportion of 0.0001 to 0.1 % by weight.
   Item I. The composition according to any one of items A through H, wherein the composition contains a reducing sugar, the total proportion of the reducing sugar in the composition is 1 to 40 % by weight.
   Item J. The composition according to any one of items A through I, wherein the composition contains an ascorbic acid compound, the total proportion of the ascorbic acid compound in the composition is 0.001 to 0.1 % by weight.
   Item K. The composition according to any one of items A through J, wherein the composition contains a metal, the total proportion of the metal in the composition is 0.0001 to 0.01 % by weight.
   Item L. The composition according to any one of items A through K, which comprises at least one selected from the group comprising isoquercitrin, enzymatically modified isoquercitrin, rutin, and enzymatically modified rutin in a total proportion of 0.0005 to 0.5 wt%, or comprises at least one selected from the group comprising Chinese bayberry extract and rosemary extract in a total proportion in terms of solids of 0.0001 to 0.2 wt%.
   Item M. The composition according to any one of items A through L, for which fading of the tar colorant that may occur through irradiation with light is suppressed.
   Item N. The composition according to any one of items A through L, for which light-fastness of the tar colorant is improved.

### BRIEF DESCRIPTION OF THE DRAWINGS

FIG. 1 is a graph showing results of investigating the effects of various test substances (SANMELIN AO-1007 (Enzymatically modified isoquercitrin), SANMELIN Y-AF (Chinese bayberry extract), NQ-568 (Rosemary extract), L-ascorbic acid, control: likewise in the fo0llowing FIGS. 2 to 10) in suppressing fading of Food Red No. 2 through irradiation with light in the presence of a reducing sugar in experimental example 1.
FIG. 2 is a graph showing results of investigating the effects of various test substances in suppressing fading of Food Red No. 3 through irradiation with light in the presence of a reducing sugar in experimental example 1.
FIG. 3 is a graph showing results of investigating the effects of various test substances in suppressing fading of Food Red No. 40 through irradiation with light in the presence of a reducing sugar in experimental example 1.
FIG. 4 is a graph showing results of investigating the effects of various test substances in suppressing fading of Food Red No. 102 through irradiation with light in the presence of a reducing sugar in experimental example 1.
FIG. 5 is a graph showing results of investigating the effects of various test substances in suppressing fading of Food Red No. 104 through irradiation with light in the presence of a reducing sugar in experimental example 1.
FIG. 6 is a graph showing results of investigating the effects of various test substances in suppressing fading of Food Red No. 105 through irradiation with light in the presence of a reducing sugar in experimental example 1.
FIG. 7 is a graph showing results of investigating the effects of various test substances in suppressing fading of Food Yellow No. 4 through irradiation with light in the presence of a reducing sugar in experimental example 1.
FIG. 8 is a graph showing results of investigating the effects of various test substances in suppressing fading of Food Yellow No. 5 through irradiation with light in the presence of a reducing sugar in experimental example 1.
FIG. 9 is a graph showing results of investigating the effects of various test substances in suppressing fading of Food Blue No. 1 through irradiation with light in the presence of a reducing sugar in experimental example 1.
FIG. 10 is a graph showing results of investigating the effects of various test substances in suppressing fading of Food Blue No. 2 through irradiation with light in the presence of a reducing sugar in experimental example 1.
FIG. 11 is a graph showing results of investigating the effects of enzymatically modified isoquercitrin in suppressing fading of Food Red No. 2 through irradiation with light in the presence of a reducing sugar or L-ascorbic acid in experimental example 2.
FIG. 12 is a graph showing results of investigating the effects of enzymatically modified isoquercitrin in suppressing fading of Food Red No. 102 through irradiation with light in the presence of a reducing sugar or L-ascorbic acid in experimental example 2.
FIG. 13 is a graph showing results of investigating the effects of enzymatically modified isoquercitrin in suppressing fading of Food Red No. 40 through irradiation with light in the presence of a reducing sugar or L-ascorbic acid in experimental example 2.

### BEST MODE FOR CARRYING OUT THE INVENTION

Following is a detailed description of the present invention.

### (1) Method of suppressing fading of tar colorant

The present invention provides a method of suppressing fading of a tar colorant, for a composition containing (a) the tar colorant, and (b) at least one selected from the group consisting of reducing sugars, ascorbic acid compounds, and metals.

There are no particular limitations on the (a) tar colorant targeted by the fading-suppressing method of the present invention. A tar colorant that can be orally taken is preferable, in particular one that can be used in foods/drinks. Examples of such tar colorants are those shown in Table 1, although there is no limitation thereto.

**<Table 1>**

| Classification by structure | Colorant name | Food additive name | English name | FDA name | Chemical name (CAS No.) |
|---|---|---|---|---|---|
| Azo colorants | Red No. 2 | Food Red No. 2 | Amaranth | - | 1-(4-sulfo-1-naphthylazo)-2-naphthol-3,6-disulfonic acid, trisodium salt (No. 915-67-3) |
| | Red No.40 | Food Red No. 40 | Allura Red AC | FD&C Red No. 40 | |
| | Red No. 102 | Food Red No. 102 | New Coccine | - | 1-(4-sulfo-1-naphthylazo)-2-naphthol-6,8-disulfonic acid, trisodium salt (No. 2611-82-7) |
| | Yellow No. 4 | Food Yellow No. 4 | Tartrazine | FD&C Yellow No. 5 | 3-carboxy-5-hydroxy-1-para-sulfopheny-4-para-sulfophenylazopyrazole, trisodium salt (No. 1934-21-0) |
| | Yellow No. 5 | FoodYellow No. 5 | Sunset Yellow FCF | FD&C Yellow No. 6 | 1- para-sulfophenylazo-2-naphthol-6-sulfonic acid, disodium salt (No. 2783-94-0) |
| | Azorubin | - | Azorubin | - | 4-hydroxy-3[(4-sulfo-1-naphthalenyl)azo]-1-naphthalenesulfonic acid, disodium salt (No. 3567-69-9) |
| Xanthene colorants | Red No. 3 | Food Red No. 3 | Erythrosine | FD&C Red No. 3 | 9-ortho-carboxyphenyl-6-hydroxy-2,4,5,7-tetraiodo-3-isoxanthone, disodium salt (No. 16423-68-0) |
| | Red No. 104 | Food Red No. 104 | Phloxine B | FD&C Red No. 28 | 9-(3,4,5,6-tetrachloro-ortho-carboxypheny 1)-6-hydroxy-2,4,5,7-tetrabromo-3-isoxanthone, disodium salt (No. 18472-87-2) |
| | Red No. 105 | Food Red No. 105 | Rose Bengale | - | 9-(3,4,5,6-tetrachloro-ortho-carboxypheny 1)-6-hydroxy-2,4,5,7-tetraiodo-3-isoxanthone, disodium salt (No. 632-69-9) |
| | Red No. 106 | Food Red No. 106 | Acid Red | - | 9-(4'-sulfo-2'-sulfoniumphenyl)-6-diethylamino-3-(N,N-diethylimino)-3-isoxanthene, monosodium salt (No. 3520-42-1) |
| Triphenylmethane colorants | Blue No. 1 | Food Blue No. 1 | Brilliant Blue FCF | FD&C Blue No. 1 | 4-{[4-(N-ethyl-meta-sulfobenzylamino)-phenyl]-(2-sulfoniumphenyl)-methylene}-[1-(N -ethyl-N-meta-sulfobenzyl)-Δ^{2,5}-cyclohexa dienimine],disodium salt (No. 3844-45-9) |
| | Green No. 3 | Food Green No. 3 | Fast Green FCF | FD&C Green No. 3 | 4-{[4-(N-ethyl-meta-sulfobenzylamino)-phenyl]-(4-hydroxy-2-sulfoniumphenyl)-methyl ene}-[1-(N-ethyl-N-meta-sulfobenzyl)-Δ^{2,5}-cyclohexadienimine], disodium salt (No. 2353-45-9) |
| Indigoid colorants | Blue No.2 | Food Blue No. 2 | Indigo Carmine | FD&C Blue No. 2 | 5,5'-indigotindisulfonic acid, disodium salt (No. 860-22-0) |
| Quinoline colorants | Yellow No. 203 | - | Quinoline Yellow WS | FD&C Yellow No. 10 | 2-(2-quinolyl)-1,3-indandionedisulfonic acid, disodium salt (No. 8004-92-0) |

The colorants shown in Table 1 above are all soluble in water and alcohols (lower alcohols having 1 to 6 carbon atoms, and polyhydric alcohols such as glycols and glycerol).

There are no particular limitations on the proportion of the tar colorant in the composition, but it is desirable for the tar colorant to be contained in a proportion of 0.0001 to 0.1 wt%, preferably 0.0002 to 0.01 wt%, more preferably 0.0003 to 0.005 wt%, per 100 wt% of the final composition to which the method of the present invention has been applied.

Reducing sugars targeted by the present invention are sugars that exhibit reducibility. There are no particular limitations thereon so long as reducibility is exhibited, with monosaccharides, disaccharides, trisaccharides, tetrasaccharides and higher oligosaccharides, and mixtures thereof being included. Specific examples include fructose, glucose, arabinose, galactose, xylose, sorbose, mannose, ribose, rhamnose, kojibiose, nigerose, maltose, isomaltose, gentiobiose, laminaribiose, cellobiose, lactose, melibiose, maltotriose, panose, isomaltotriose, liquid sugar, fructose-glucose liquid sugar, invert sugar, starch syrup, honey, and maple sugar.

In the case that the composition is a composition containing a reducing sugar, although there are no particular limitations, it is desirable for the reducing sugar to be contained in a total proportion of 1 to 40 wt%, preferably 5 to 30 wt%, more preferably 10 to 20 wt%, per 100 wt% of the final composition to which the method of the present invention has been applied.

Ascorbic acid compounds targeted by the present invention include ascorbic acid, alkali metal salts of ascorbic acid, alkaline earth metal salts of ascorbic acid, fatty acid esters of ascorbic acid, erythorbic acid, and alkali metal salts of erythorbic acid. Here, examples of an alkali metal salt of ascorbic acid or erythorbic acid are a sodium salt and a potassium salt. A sodium salt is preferable. Moreover, a preferable example of an alkaline earth metal salt of ascorbic acid is a calcium salt. An example of a fatty acid ester of ascorbic acid is an ester formed from ascorbic acid and a fatty acid having 4 to 22 carbon atoms, with preferable examples being ascorbyl stearate and ascorbyl palmitate.

In the case that the composition is a composition containing an ascorbic acid compound, although there are no particular limitations, it is desirable for the ascorbic acid compound to be contained in a total proportion of 0.001 to 0.1 wt%, preferably 0.003 to 0.05 wt%, more preferably 0.005 to 0.01 wt%, per 100 wt% of the final composition to which the method of the present invention has been applied.

Metals targeted by the present invention include iron, copper, tin, calcium, aluminum, zinc, magnesium, and lead.

In the case that the composition is a composition containing a metal, although there are no particular limitations, it is desirable for the metal to be contained in a total proportion of 0.0001 to 0.01 wt%, preferably 0.0005 to 0.007 wt%, more preferably 0.001 to 0.005 wt%, per 100 wt% of the final composition to which the method of the present invention has been applied.

The method of the present invention can be carried out by mixing (c) at least one selected from the group consisting of isoquercitrin or enzyme-treated one thereof (enzymatically modified isoquercitrin), rutin or enzyme-treated one thereof (enzymatically modified rutin), Chinese bayberry extract, and rosemary extract into a composition containing at least the component (a) and the component (b) described above, thus making the component (a), the component (b) and the component (c) coexist.

Isoquercitrin is also called isoquercetin, and is a compound present in plants such as *dokudami* (*Houttuynia cordata Thunb*), luobuma (yan-long tea)(*Apocynum Venetun*)*,* cucumber, cotton, white clover *(Trifolium repens),* and mulberry. This compound is said to have an antioxidant action, an ultraviolet preventative action, and a metal chelating action, and also pharmacological actions such as a diuretic action, an anti-inflammatory action, a capillary strengthening action and a vitamin P-like action, and is useful as an additive in foods/drinks, perfumes and cosmetics, medicines and so on, and also as a raw material in cosmetics and health foods/drinks. This compound can be prepared by treating rutin with a naringin-degrading enzyme. Here, 'naringin-degrading enzyme' includes all enzymes that have an activity of degrading rutin into isoquercitrin and rhamnose (a naringin-degrading activity), regardless of the name of the enzyme. A representative example of such an enzyme is naringinase, but enzymes having a naringin-degrading activity are also known among rhamnosidases (α-L-rhamnosidases), hesperidinase and pectinases.

Enzymatically modified isoquercitrin is obtained by subjecting such isoquercitrin, which is a flavonoid having poor water solubility, to glycosylation treatment (enzyme treatment), thus increasing the water solubility. The main component of enzymatically modified isoquercitrin is α-glucosyl isoquercitrin. There are no particular limitations on the method of preparing the enzymatically modified isoquercitrin, but for example the enzymatically modified isoquercitrin can be prepared by subjecting a mixture of isoquercitrin and a substrate acting as a glucose source to treatment with a glucose transferase, thus transferring at least one glucose residue from the substrate into a glucose residue site of the isoquercitrin. Here, examples of the glucose source are glucose, maltose, amylose, amylopectin, starches, liquefied starches, saccharified starches, dextrin, and cyclodextrin. Moreover, examples of the glucose transferase are glucosidases (α-amylase [E.C.3.2.1.1], α-glucosidase [E.C.3.2.1.20], β-amylase [E.C.3.2.1.2], glucoamylase [E.C.3.2.1.3]) and transglucosidases (cyclodextrin glucanotransferase [E.C.2.4.1.19] etc.).

Rutin is a representative flavonol glycoside, is widely present in the plant kingdom, such as in buckwheat, tartary buckwheat, adzuki beans, oranges, flower buds of *Sophora japonica* and so on, and is a useful substance as with isoquercitrin.

Enzymatically modified rutin is obtained by subjecting the said rutin, which is a flavonoid having poor water solubility, to glycosylation treatment (enzyme treatment), thus increasing the water solubility. The main component of enzymatically modified rutin is α-glucosyl rutin. The enzymatically modified rutin can be prepared according to the method shown for enzymatically modified isoquercitrin.

In the present invention, any of isoquercitrin, enzymatically modified isoquercitrin, rutin and enzymatically modified rutin can be used, but as mentioned above, isoquercitrin and rutin have poor water solubility, only dissolving at a maximum of approximately 0.001 w/v% in water at room temperature, and hence in the case that the targeted tar colorant-containing composition is an aqueous composition, it is preferable to use enzymatically modified isoquercitrin or enzymatically modified rutin.

There are no particular limitations on the proportion in which the isoquercitrin, enzymatically modified isoquercitrin, rutin or enzymatically modified rutin is used, but it is desirable for the isoquercitrin, enzymatically modified isoquercitrin, rutin or enzymatically modified rutin to be used so as to be contained in a total proportion of 0.0005 to 0.5 wt%, preferably 0.001 to 0.2 wt%, more preferably 0.0015 to 0.1 wt%, per 100 wt% of the final composition. In the case of using isoquercitrin or rutin in an aqueous composition, the isoquercitrin or rutin is preferably used in a proportion of not more than 0.01 w/v% from the viewpoint of the stability of solution in water.

Chinese bayberry extract is an extract containing the flavonoid, i.e. myricitrin, obtained by extraction from the fruit, bark or leaves of *Myrica rubra* SIEBOLD using water, ethanol, methanol or the like. Moreover, rosemary extract is an extract containing phenolic diterpenoids (rosmanol, carnosol, carnosic acid etc.), and rosmarinic acid and so on, obtained by extraction from the leaves or flowers of *Rosmarinus officinalis* LINNE. There are no particular limitations on the extraction method, but examples are a method of in which is extraction is carried out from the leaves or flowers of *Rosmarinus officinalis* LINNE with carbon dioxide, warm to hot water-containing ethanol or ethanol, and a method of in which is extraction is carried out with warm to hot hexane, methanol or water-containing methanol, and then the solvent is removed.

Each of such Chinese bayberry extract and rosemary extract has an antioxidant activity, and is used as an additive (antioxidant) in foods, perfumes and cosmetics, medicines and so on.

In the case of using Chinese bayberry extract or rosemary extract, there are no particular limitations on the proportion used thereof, but it is desirable for the Chinese bayberry extract or rosemary extract to be used so as to be contained in a proportion of 0.0001 to 0.2 wt%, preferably 0.0002 to 0.1 wt%, more preferably 0.0003 to 0.05 wt%, in terms of solids per 100 wt% of the final composition.

There are no particular limitations on the use or type of the composition to which the method of the present invention is applied so long as the composition contains (a) a tar colorant, and (b) at least one selected from the group consisting of reducing sugars, ascorbic acid compounds, and metals. A preferable composition is one that is intended to be for oral use, or may be ingested from the mouth. In the present invention, such compositions are referred to collectively as 'orally-available compositions'. Specific examples of such orally-available compositions are foods/drinks, cosmetics, orally-administered medicines, medicines for the oral cavity, quasi-drugs for the oral cavity, and animal feeds.

Examples of 'cosmetics' here are lipsticks and lip creams that might be ingested from the mouth. Moreover, examples of medicines for the oral cavity and quasi-drugs for the oral cavity are toothpastes, toothpowders, dental rinses, mouthwashes, pastes, and ointments/creams for the oral cavity. Moreover, examples of orally-administered medicines are orally taken tablets (including sugar-coated tablets), pills, powders, granules, capsules, syrups (including dry syrups), drinks, lozenges, and gargles. Moreover, examples of animal feeds are various pet foods such as cat foods and dog foods, animal feeds and feeds for ornamental fish or cultured fish.

There are no particular limitations on a food/drink, so long as the food/drink contains at least one of above components (b) and is colored by a tar colorant. Examples are frozen desserts such as ice cream, ice milk, lacto-ices, sherbets, and ice candy; beverages such as milk beverages, lactic acid bacteria beverages, fruit juice-containing soft drinks, carbonated beverages, fruit juice beverages, and powdered beverages; desserts such as puddings (custard pudding, milk pudding, fruit juice-containing puddings and so on), jellies, bavaroise, and yogurts; gums (stick type or sugar-coated pellet type) such as chewing gum and bubble gum; chocolate such as coating chocolate such as marble chocolate, and also flavored chocolate such as strawberry chocolate, blueberry chocolate, and melon chocolate; candy such as hard candy (including bon-bons, butter balls, marbles, etc.), soft candy (including caramel, nougat, gummy candy, marshmallow, etc.), drops, and caramel candy such as toffee; baked confectionery such as hard biscuits, cookies, *okaki* (rice crackers), and *senbei* (rice crackers); *tsukemono* (Japanese pickles) such as *asa-zuke, shoyu-zuke, shio-zuke, miso-zuke, kasu-zuke, koji-zuke, nuka-zuke, su-zuke, karashi-zuke, moromi-zuke, ume-zuke, fukujin-zuke, shiba-zuke, shoga-zuke, chosen-zuke,* and *umezu-zuke;* sauces such as separate dressings, oil-free dressings, ketchups, dips, and Worcester sauce; jams such as strawberry j am, blueberry j am, marmalade, apple j am, apricot jam, and preserves; fruit wines such as red wine; fruits for processing such as cherries, apricots, apples and strawberries in syrup; processed meat products such as ham, sausages, and roast pork; seafood paste products such as fish ham, fish sausages, minced fish, *kamaboko* (fish paste cakes), *chikuwa* (fish paste cakes), *hanpen* (pounded fish cakes), *satsumaage* (fried fish cakes), *datemaki* (fishomelets), and whale bacon; noodles/pasta such as *udon* noodles, *hiyamugi* noodles, *somen* noodles, *soba* noodles, Chinese noodles, spaghetti, macaroni, rice vermicelli, bean-starch vermicelli, and wonton; and also various processed foods such as side dishes, *kamaboko* (fish paste cakes), *fu* (wheat gluten bread), and *denbu* (mashed fish or meet).

Out of these foods/drinks, confectionery and beverages are preferable.

According to the findings of the present inventors, with compositions containing (a) a tar colorant, and (b) at least one selected from the group consisting of reducing sugars, ascorbic acid compounds, and metals, in general the tar colorant becomes unstable, and hence fading tends to occur over time. Moreover, this tendency is marked in particular in the case that such a composition is subjected to irradiation with light, for example irradiation with sunlight or fluorescent light. In contrast with this, with a composition to which the method of the present invention has been applied, i. e. a composition containing (c) at least one selected from the group consisting of isoquercitrin, enzymatically modified isoquercitrin, rutin, enzymatically modified rutin, Chinese bayberry extract, and rosemary extract in addition to the above component (a) and component (b), fading of the tar colorant is suppressed significantly, and hence the hue of the tar colorant can be maintained stably. The fading-suppressing method of the present invention is particularly useful as a method of suppressing the fading phenomenon of a tar colorant that occurs through irradiation with light such as sunlight or fluorescent light, more preferably irradiation with fluorescent light.

### (2) Tar colorant-containing composition for which fading is suppressed.

The present invention also provides a tar colorant-containing composition for which fading is suppressed by using the method described above. This composition contains (a) a tar colorant, (b) at least one selected from the group consisting of reducing sugars, ascorbic acid compounds, and metals, and (c) at least one selected from the group consisting of isoquercitrin, enzymatically modified isoquercitrin, rutin, enzymatically modified rutin, Chinese bayberry extract, and rosemary extract.

The type of the tar colorant and the proportion thereof in the composition are as described in (1). Moreover, the type of reducing sugars and the proportion thereof in the composition, the type of ascorbic acid compounds and the proportion thereof in the composition, and the type of metals and the proportion thereof in the composition, and also the proportion of isoquercitrin or enzymatically modified isoquercitrin, rutin or enzymatically modified rutin, Chinese bayberry extract, or rosemary extract in the composition are also as described in (1).

The type of the composition containing these components and the use thereof are also as described in (1). The composition is preferably an orally-available composition. Such orally-available compositions include foods/drinks, cosmetics, orally-administered medicines, medicines for the oral cavity, quasi-drugs for the oral cavity, and animal feeds. Moreover, the composition can be prepared following an ordinary preparation method for such a composition, this being in accordance with the use and type of the composition.

There are no particular limitations on the time at which the at least one selected from the group consisting of isoquercitrin, enzymatically modified isoquercitrin, rutin, enzymatically modified rutin, Chinese bayberry extract, and rosemary extract that constitutes component (c) ismixedin, but this is preferably before the foods/drinks, cosmetic, medicine, quasi-drug, animal feed or the like targeted may be subjected to fading. Considering that such a targeted article will be subjected considerably to the effects of light (fluorescent light) and heat in the manufacturing process thereof, it is preferable for the above component (c) to be mixed in with the other ingredients during the manufacture of the targeted article, preferably before the targeted article is subjected to fading by fluorescent light or the like as above.

### Examples

Following is a description of the present invention, giving experimental examples; however, the present invention is not limited to these experimental examples.

### Experimental example 1

Liquid compositions (colored syrups) each containing fructose-glucose liquid sugar as a reducing sugar and a tar colorant (see Table 2) were prepared following a recipe as below. In the case of using Food Red No. 2 (R-2), Food Red No. 40 (R-40), Food Red No. 102 (R-102), Food Red No. 105 (R-105), Food Yellow No. 4 (Y-4), Food Yellow No. 5 (Y-5), Food Blue No. 1 (B-1) or Food Blue No. 2 (B-2) as the colorant, the liquid composition was prepared following Recipe 1 below, whereas in the case of using Food Red No. 3 (R-3) or Food Red No. 104 (R-104) as the colorant, the liquid composition was prepared following Recipe 2 below. Moreover, each of the components shown in Table 3, as a test substance, was mixed into each of the liquid compositions.

| <Recipe 1> Brix 10°, pH 3.0 | |
|---|---|
| Fructose-glucose liquid sugar (KINGMART F-55)¹⁾ | 133.3 g |
| Citric acid (crystals) ²⁾ | 0.2 g |
| Trisodium citrate ²⁾ | for adjusting pH to 3.0 |
| Tar colorant (R-2, R-40, R-102, R-105, Y-4, Y-5, B-1 or B-2) | Table 2 |
| Test substance | Table 3 |
| Total, made up with water | 1000.0 ml (100 % by weight) |

| <Recipe 2> Brix 10°, pH 7.0 | |
|---|---|
| Fructose-glucose liquid sugar (KINGMART F-55)¹⁾ | 133.3 g |
| Trisodium citrate ²⁾ | 0.2 g |
| Citric acid crystals ²⁾ | for adjusting pH to 7.0 |
| Tar colorant (R-3 or R-104) | Table 2 |
| Test substance | Table 3 |
| Total, made up with water | 1000.0 ml (100 % by weight) |

| | |
|---|---|
| ¹⁾ indicates a product of NISSI,CO.LTD., and ²⁾ indicates a product of SAN-EI GEN F.F.I., Inc. | |

**[Table 2]**

| Colorant name (abbreviation) | English name | Amount added (wt%) |
|---|---|---|
| Food Red No. 2 (R-2) | Amaranth | 0.00125 |
| Food Red No. 3 (R-3) | Erythrosine | 0.00045 |
| Food Red No. 40 (R-40) | Allura Red AC | 0.001 |
| Food Red No. 102 (R-102) | New Coccine | 0.0015 |
| Food Red No. 104 (R-104) | Phloxine | 0.00045 |
| Food Red No. 105 (R-105) | Rose Bengale | 0.0003 |
| Food Yellow No. 4 (Y-4) | Tartrazine | 0.001 |
| Food Yellow No. 5 (Y-5) | Sunset Yellow FCF | 0.001 |
| Food Blue No. 1 (B-1) | Brilliant Blue FCF | 0.0003 |
| Food Blue No. 2 (B-2) | Indigo Carmine | 0.001 |

| | | |
|---|---|---|
| * All colorants made by SAN-EI GEN F.F.I., Inc. | | |

**[Table 3]**

| Test substance | | Trade name (supplier) | Amount added (wt%) |
|---|---|---|---|
| (1) | Enzymatically modified isoquercitrin | SANMELIN* AO-1007 (SAN-EI GEN F.F.I., Inc.) | 0.0075 |
| (2) | Chinese bayberry extract | SANMELIN* Y-AF (SAN-EI GEN F.F.I., Inc.) | 0.0015 |
| (3) | Rosemary extract | NQ-568 (SAN-EI GEN F.F.I., Inc.) | 0.0025 |
| (4) | L-ascorbic acid | L-ascorbic acid (Wako Pure Chemical Industries) | 0.005 |

| | | | |
|---|---|---|---|
| * "SANMELIN" in the table is a trademark registered in JAPAN of SAN-EI GEN F.F.I., Inc. (likewise hereinafter) | | | |

Specifically, each liquid composition having the components mixed therein was heated up to 93°C (70°C for the liquid compositions containing Food Blue No. 2 only), hot packing was carried out to fill up a 110 ml colorless transparent glass bottle (made by Maruemu Corporation), and cooling was carried out, thus preparing colored syrups containing each of the test substances ((1) to (4)) for each of the colorants. Taking each of these as a test sample, the state of fading of the colorant (color-fastness to light) under irradiation with light from a fade meter (Xenon Long Life Fade Meter XWL-75R, made by Suga Test Instruments Co., Ltd, dose 600 W/m² (ultraviolet light (300 to 400 nm) : 54.5W/m², visible light (400 to 700 nm) : 545.5W/m², irradiation temperature 20°C) was observed. Moreover, in control tests, a colored syrup prepared following a recipe as above but without including a test substance (any of (1) to (4)) (i.e. a control) was similarly irradiated with light, and the state of fading of the colorant (color-fastness to light) was observed. In each case, the color-fastness to light of the colorant was evaluated as the persistence (%) obtained by measuring the absorbance at the wavelength of maximum absorption of the colorant in question after the test (after the irradiation with light), taking this absorbance before the test (before the irradiation with light) as 100%. The results are shown below.

### [Results]

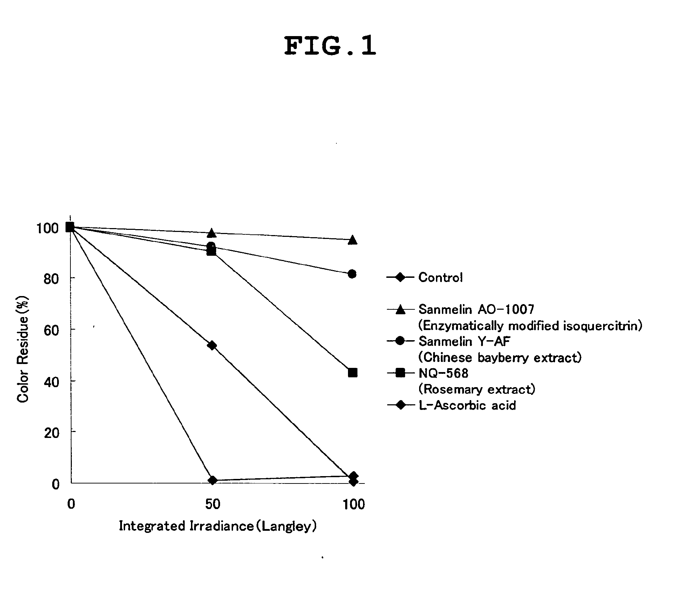

(1) Food Red No. 2 (see FIG. 1) - Absorbance measurement wavelength: 520 nm -

**[Table 4]**

| Test substance | Colorant persistence after fade meter irradiation (%) | |
|---|---|---|
| | 50 langleys | 100 langleys |
| Control | 53.6 | 0.9 |
| SANMELIN AO-1007 (enzymatically modified isoquercitrin) | 97.6 | 95.3 |
| SANMELIN Y-AF (Chinese bayberry extract) | 92.2 | 81.5 |
| NQ-568 (rosemary extract) | 90.4 | 43.2 |
| L-ascorbic acid | 1.1 | 3.0 |

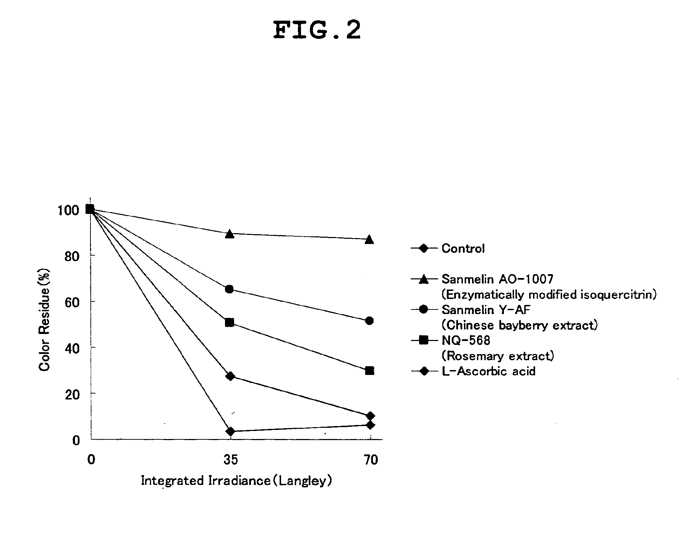

As can be seen from the above table 4 and FIG. 1, with the Food Red No. 2-containing syrups to which enzymatically modified isoquercitrin, Chinese bayberry extract or rosemary extract was added, fading by light was suppressed significantly. In particular, enzymatically modified isoquercitrin was found to have an excellent fading-suppressing effect.
(2) Food Red No. 3 (see FIG. 2) - Absorbance measurement wavelength: 526 nm -

**[Table 5]**

| Test substance | Colorant persistence after fade meter irradiation (%) | |
|---|---|---|
| | 35 langleys | 70 langleys |
| Control | 27.6 | 10.3 |
| SANMELIN AO-1007 (enzymatically modified isoquercitrin) | 89.5 | 87.0 |
| SANMELIN Y-AF (Chinese bayberry extract) | 64.5 | 51.3 |
| NQ-568 (rosemary extract) | 50.4 | 29.6 |
| L=ascorbic acid | 3.7 | 6.4 |

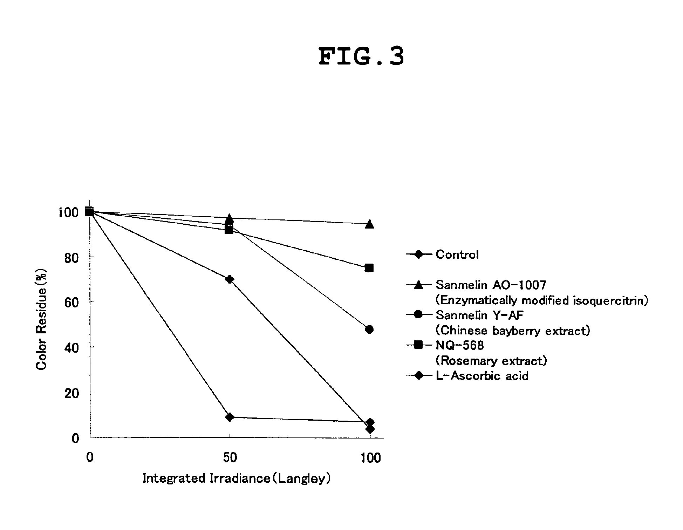

As can be seen from the above table 5 and FIG. 2, with the Food Red No. 3-containing syrups to which enzymatically modified isoquercitrin, Chinese bayberry extract or rosemary extract was added, fading by light was suppressed significantly. In particular, enzymatically modified isoquercitrin was found to have an excellent fading-suppressing effect.
(3) Food Red No. 40 (see FIG. 3) - Absorbance measurement wavelength: 506 nm -

**[Table 6]**

| Test substance | Colorant persistence after fade meter irradiation (%) | |
|---|---|---|
| | 50 langleys | 100 langleys |
| Control | 69.9 | 3.8 |
| SANMELIN AO-1007 (enzymatically modified isoquercitrin) | 97.1 | 94.9 |
| SANMELIN Y-AF (Chinese bayberry extract) | 93.8 | 48.0 |
| NQ-568 (rosemary extract) | 91.6 | 75.3 |
| L-ascorbic acid | 9.1 | 6.9 |

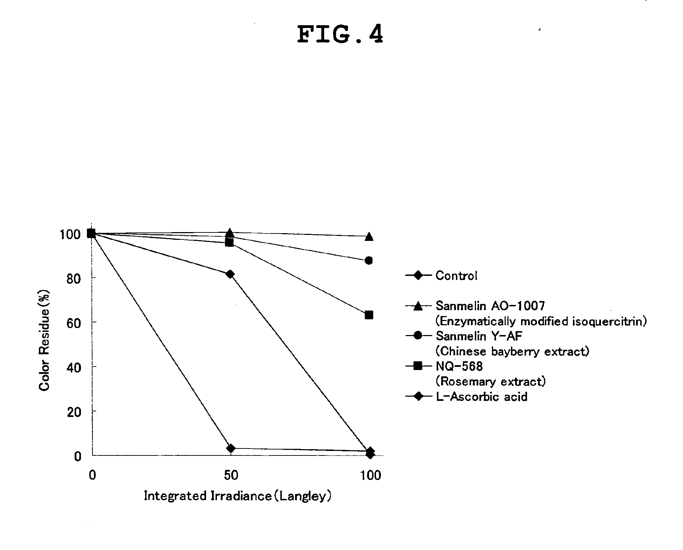

As can be seen from the above table 6 and FIG. 3, with the Food Red No. 40-containing syrups to which enzymatically modified isoquercitrin, Chinese bayberry extract or rosemary extract was added, fading by light was suppressed significantly. In particular, enzymatically modified isoquercitrin was found to have an excellent fading-suppressing effect.
(4) Food Red No. 102 (see FIG. 4) - Absorbance measurement wavelength: 509 nm -

**[Table 7]**

| Test substance | Colorant persistence after fade meter irradiation (%) | |
|---|---|---|
| | 50 langleys | 100 langleys |
| Control | 81.7 | 0.6 |
| SANMELIN AO-1007 (enzymatically modified isoquercitrin) | 100.7 | 98.8 |
| SANMELIN Y-AF (Chinese bayberry extract) | 98.5 | 87.8 |
| NQ-568 (rosemary extract) | 95.6 | 63.4 |
| L-ascorbic acid | 3.3 | 2.2 |

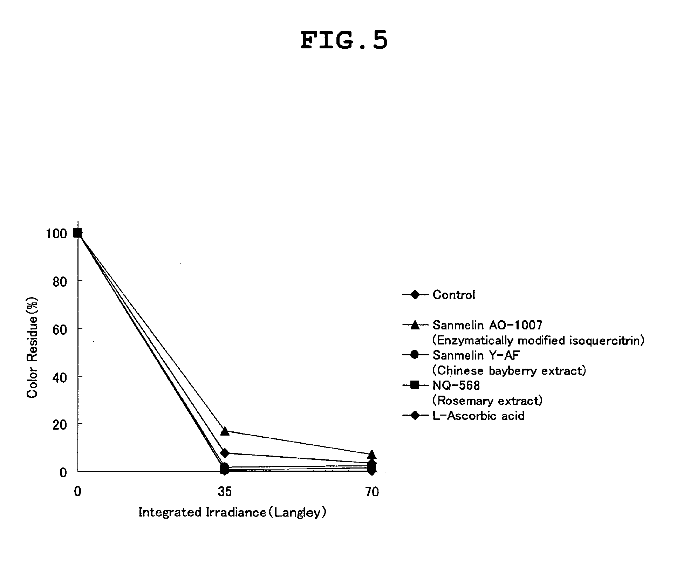

As can be seen from the above table 7 and FIG. 4, with the Food Red No. 102-containing syrups to which enzymatically modified isoquercitrin, Chinese bayberry extract or rosemary extract was added, fading by light was suppressed significantly. In particular, enzymatically modified isoquercitrin was found to have an excellent fading-suppressing effect.
(5) Food Red No. 104 (see FIG. 5) - Absorbance measurement wavelength: 540 nm -

**[Table 8]**

| Test substance | Colorant persistence after fade meter irradiation (%) |
|---|---|
| | 70 langleys |
| Control | 0.6 |
| SANMELIN AO-1007 (enzymatically modified isoquercitrin) | 7.5 |
| SANMELIN Y-AF (Chinese bayberry extract) | 2.6 |
| NQ-568 (rosemary extract) | 1.8 |
| L-ascorbic acid | 0.0 |

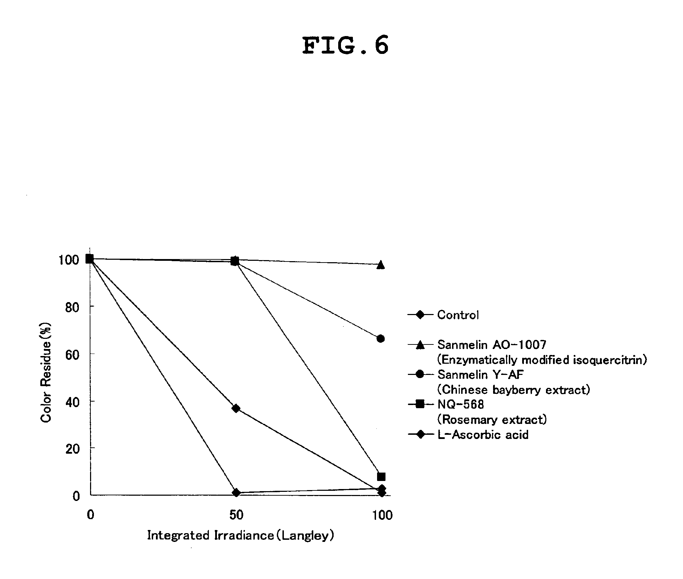

As can be seen from the above table 8 and FIG. 5, with the Food Red No. 104-containing syrups to which enzymatically modified isoquercitrin, Chinese bayberry extract or rosemary extract was added, fading by light was suppressed significantly. In particular, enzymatically modified isoquercitrin was found to have an excellent fading-suppressing effect.
(6) Food Red No. 105 (see FIG. 6) - Absorbance measurement wavelength: 548 nm -

**[Table 9]**

| Test substance | Colorant persistence after fade meter irradiation (%) | |
|---|---|---|
| | 50 langleys | 100 langleys |
| Control | 36.7 | 1.0 |
| SANMELIN AO-1007 (enzymatically modified isoquercitrin) | 99.8 | 98.1 |
| SANMELIN Y-AF (Chinese bayberry extract) | 98.5 | 66.4 |
| NQ-568 (rosemary extract) | 98.9 | 7.9 |
| L-ascorbic acid | 1.2 | 2.9 |

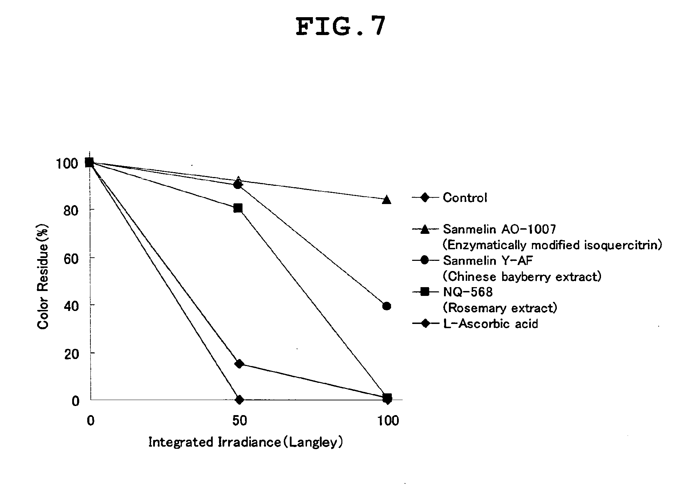

As can be seen from the above table 9 and FIG. 6, with the Food Red No. 105-containing syrups to which enzymatically modified isoquercitrin, Chinese bayberry extract or rosemary extract was added, fading by light was suppressed significantly. In particular, enzymatically modified isoquercitrin was found to have an excellent fading-suppressing effect.
(7) Food Yellow No. 4 (see FIG. 7) - Absorbance measurement wavelength: 428 nm -

**[Table 10]**

| Test substance | Colorant persistence after fade meter irradiation (%) | |
|---|---|---|
| | 50 langleys | 100 langleys |
| Control | 15.3 | 0.9 |
| SANMELIN AO-1007 (enzymatically modified isoquercitrin) | 92.2 | 84.4 |
| SANMELIN Y-AF (Chinese bayberry extract) | 90.3 | 39.1 |
| NQ-568 (rosemary extract) | 80.4 | 0.8 |
| L-ascorbic acid | 0.0 | 0.0 |

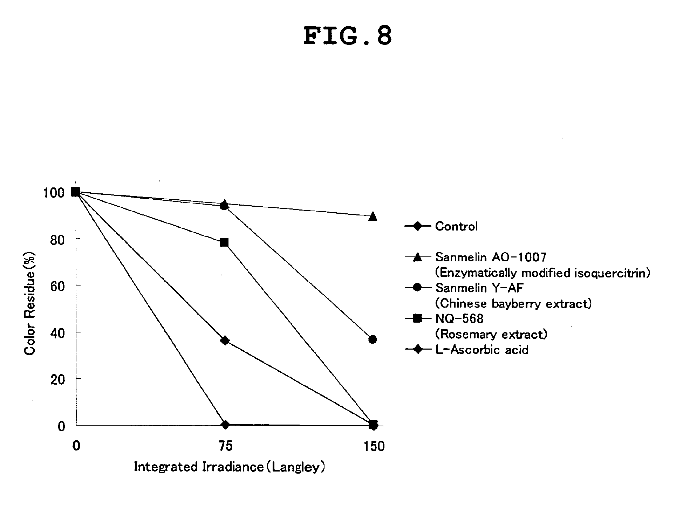

As can be seen from the above table 10 and FIG. 7, with the Food Yellow No. 4-containing syrups to which enzymatically modified isoquercitrin, Chinese bayberry extract or rosemary extract was added, fading by light was suppressed significantly. In particular, enzymatically modified isoquercitrin was found to have an excellent fading-suppressing effect.
(8) Food Yellow No. 5 (see FIG. 8) - Absorbance measurement wavelength: 482 nm -

**[Table 11]**

| Test substance | Colorant persistence after fade meter irradiation (%) | |
|---|---|---|
| | 70 langleys | 150 langleys |
| Control | 36.5 | 0.4 |
| SANMELIN AO-1007 (enzymatically modified isoquercitrin) | 94.9 | 89.8 |
| SANMELIN Y-AF (Chinese bayberry extract) | 93.6 | 36.8 |
| NQ-568 (rosemary extract) | 78.3 | 0.4 |
| L-ascorbic acid | 0.2 | 0.0 |

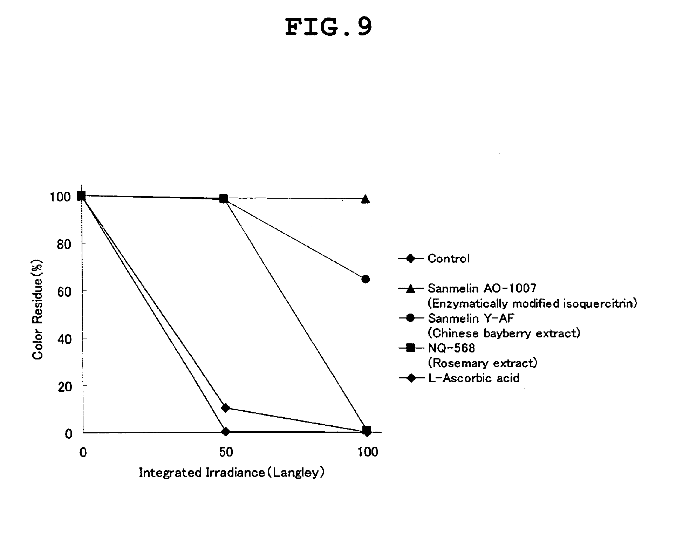

As can be seen from the above table 11 and FIG. 8, with the Yellow Red No. 5-containing syrups to which enzymatically modified isoquercitrin, Chinese bayberry extract or rosemary extract was added, fading by light was suppressed significantly. In particular, enzymatically modified isoquercitrin was found to have an excellent fading-suppressing effect.
(9) Food Blue No. 1 (see FIG. 9) - Absorbance measurement wavelength: 630 nm -

**[Table 12]**

| Test substance | Colorant persistence after fade meter irradiation (%) | |
|---|---|---|
| | 50 langleys | 100 langleys |
| Control | 10.4 | 0.1 |
| SANMELIN AO-1007 (enzymatically modified isoquercitrin) | 99.2 | 98.7 |
| SANMELIN Y-AF (Chinese bayberry extract) | 98.5 | 64.7 |
| NQ-568 (rosemary extract) | 98.6 | 0.7 |
| L-ascorbic acid | 0.3 | 0.1 |

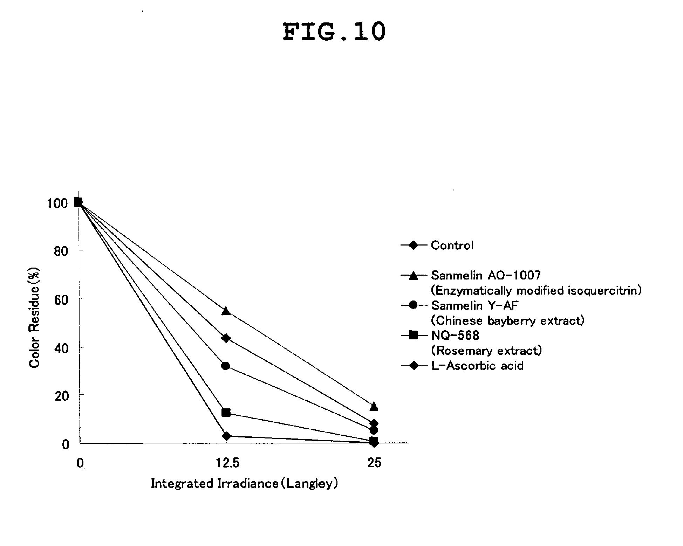

As can be seen from the above table 12 and FIG. 9, with the Food Blue No. 1-containing syrups to which enzymatically modified isoquercitrin, Chinese bayberry extract or rosemary extract was added, fading by light was suppressed significantly. In particular, enzymatically modified isoquercitrin was found to have an excellent fading-suppressing effect.
(10) Food Blue No. 2 (see FIG. 10) - Absorbance measurement wavelength: 612 nm -

**[Table 13]**

| Test substance | Colorant persistence after fade meter irradiation (%) |
|---|---|
| | 12.5 langleys |
| Control | 2.9 |
| SANMELIN AO-1007 (enzymatically modified isoquercitrin) | 54.7 |
| SANMELIN Y-AF (Chinese bayberry extract) | 31.8 |
| NQ-568 (rosemary extract) | 12.4 |
| L-ascorbic acid | 43.4 |

As can be seen from the above table 13 and FIG. 10, with the Food Blue No. 2-containing syrups to which enzymatically modified isoquercitrin, Chinese bayberry extract or rosemary extract was added, fading by light was suppressed significantly. In particular, enzymatically modified isoquercitrin was found to have an excellent fading-suppressing effect.

### Experimental example 2

Liquid compositions 1 (vitamin C-supplemented colored syrups) and liquid compositions 2 (vitamin C-nonsupplemented colored syrups) each containing fructose-glucose liquid sugar (a reducing sugar) and a tar colorant (Food Red No. 2, (R-2), Food Red No. 102 (R-102), or Food Red No. 40 (R-40)) were prepared following recipes 3 and 4 as below, respectively. To each of these liquid compositions, an enzymatically modified isoquercitrin (SANMELIN AO-1007: SAN-EI GEN F.F.I., Inc.) was added and mixed therein such that the final concentration thereof was 0.0075 wt%.

| <Recipe 3> Vitamin C-supplemented colored syrups: Brix 10°, pH 3.0 | |
|---|---|
| Fructose-glucose liquid sugar (KINGMART F-55) ¹⁾ | 130.0 g |
| Citric acid (crystals) ²⁾ | 2.0 g |
| Trisodium citrate ²⁾ | for adjusting pH to 3.0 |
| Tar colorant (R-2, R-102, or R-40) | Table 14 |
| L-ascorbic acid (vitamin C) ³⁾ | 0.05 g |
| Total, made up with water | 1000.0 ml (100 % by weight) |

| <Recipe 4> Vitamin C-nonsupplemented colored syrups: Brix 10°, pH 3.0 | |
|---|---|
| Fructose-glucose liquid sugar (KINGMART F-55)¹⁾ | 130.0 g |
| Citric acid (crystals) ²⁾ | 2.0 g |
| Trisodium citrate ²⁾ | for adjusting pH to 3.0 |
| Tar colorant (R-2, R-102, or R-40) | Table 15 |
| Total, made up with water | 1000.0 ml (100 by weight %) |

In Recipe 3 and Recipe 4, ¹⁾ indicates a product of NISSI, CO. LTD., ²⁾ indicates a product of SAN-EI GEN F.F.I., Inc., and ³⁾ indicates a product of Wako Pure Chemical Industries, Ltd.

Specifically, each liquid composition 1 or 2 obtained by mixing the respective components together was heated up to 93°C, hot packing was carried out to fill up a 110 ml colorless transparent glass bottle (made by Maruemu Corporation), and cooling was carried out, whereby colored syrups containing each of the colorants were prepared. Taking each of these as a test sample, the state of fading of the colorant (color-fastness to light) under irradiation for 12 hours with light from an ultraviolet fade meter (made by Suga Test Instruments Co., Ltd, model FAL-AU·HB using carbon arc lamp) was observed. Moreover, in control tests, colored syrups prepared following each of the above recipes but without including the enzymatically modified isoquercitrin (i.e. controls) were similarly irradiated with light, and the state of fading of the colorant (color-fastness to light) was observed. In each case, the color-fastness to light of the colorant was evaluated as the persistence (%) obtained by measuring the absorbance at the wavelength of maximum absorption of the colorant in question after the test (after the irradiation with light), taking this absorbance before the test (before the irradiation with light) as 100%. Note that the test was carried out for two samples in each case, and the mean was taken. The results are shown below.

### [Results]

(1) Vitamin C-supplemented (0.005 wt%) colored syrups

**[Table 14]**

| Colorant / concentration | λₘₐₓ | Sample | Mean of colorant persistence (%) |
|---|---|---|---|
| Food Red No. 2 (R-2) 0.00125% | 522.0 | Control | 0.46 |
| | | SANMELIN AO-1007 0.05% | 95.44 |
| Food Red No. 102 (R-102) 0.0015% | 509.0 | Control | 0.58 |
| | | SANMELIN AO-1007 0.05% | 95.52 |
| Food Red No.40 (R-40) 0.001% | 505.0 | Control | 24.52 |
| | | SANMELIN AO-1007 0.05% | 94.22 |

(2) Vitamin C-nonsupplemented colored syrups

**[Table 15]**

| Colorant / concentration | λₘₐₓ | Sample | Mean of colorant persistence (%) |
|---|---|---|---|
| Food Red No. 2 (R-2) 0.00125% | 522.0 | Control | 80.31 |
| | | SANMELIN AO-1007 0.05% | 96.14 |
| Food Red No. 102 (R-102) 0.0015% | 509.0 | Control | 88.18 |
| | | SANMELIN AO-1007 0.05% | 97.14 |
| Food Red No.40 (R-40) 0.001% | 505.0 | Control | 80.01 |
| | | SANMELIN AO-1007 0.05% | 95.96 |

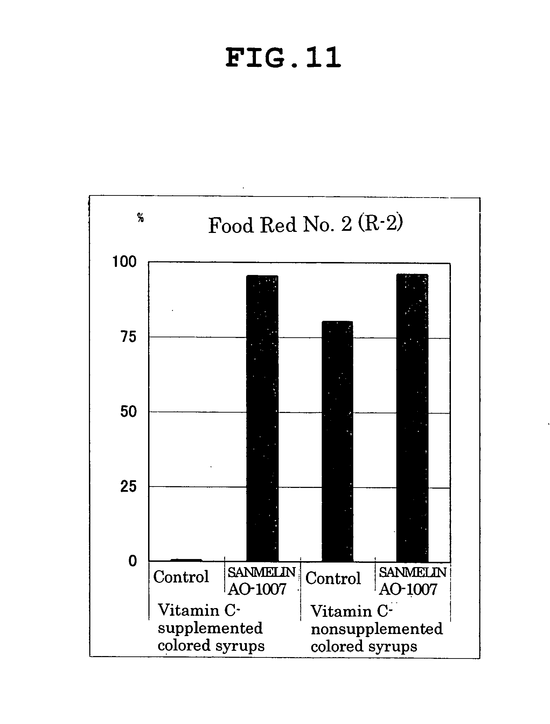

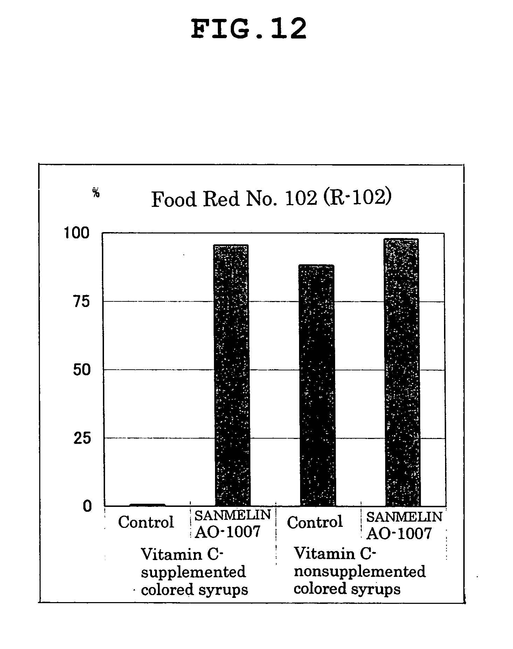

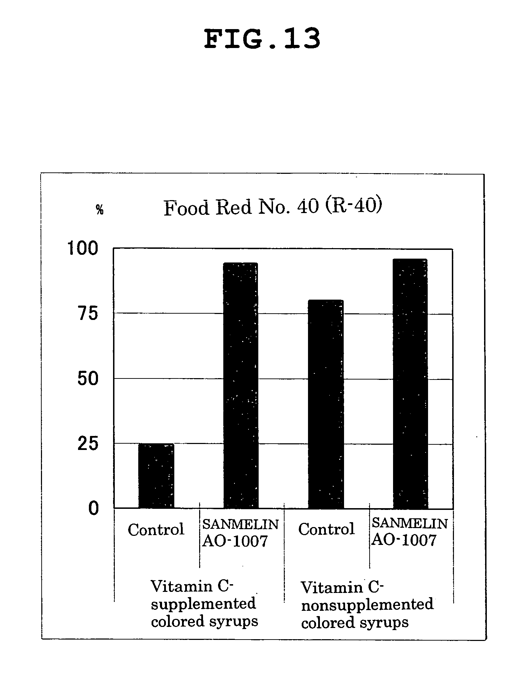

These results are shown for each tar colorant in FIG. 11 (Food Red No.2: R-2), FIG. 12 (Food Red No. 102: R-102), and FIG. 13 (Food Red No. 40: R-40).

It can be seen from the above tables 14 and 15 and FIGS. 11 to 13 that the fading due to irradiation with light seen for the vitamin C-nonsupplemented colored syrups (controls: containing reducing sugar) was suppressed significantly by adding enzymatically modified isoquercitrin. Moreover, it can be seen that marked fading occurred upon irradiation with light for the vitamin C-supplemented colored syrups (controls: containing reducing sugar), but this fading was also suppressed markedly by adding enzymatically modified isoquercitrin.

It is thought that this effect of the fading being suppressed by enzymatically modified isoquercitrin would similarly be obtained upon using isoquercitrin, or rutin, enzymatically modified rutin, Chinese bayberry extract, or rosemary extract.

Following are examples of foods/drinks to which the present invention is applied. In the recipes below, "*" means a product of SAN-EI GEN F. F. I., Inc., and " 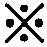 " means a trademark registered in Japan of SAN-EI GEN F.F.I., Inc.

### Examples 1 to 3

### <Recipes> Colored syrups: Brix 10°, pH 3.0

### Example 1

| | |
|---|---|
| Fructose-glucose liquid sugar (KINGMART F-55) ¹⁾ | 130.0 g |
| Citric acid (crystals) ²⁾ | 2.0 g |
| Trisodium citrate ²⁾ | for adjusting pH to 3.0 |
| Magnesium chloride | - |
| Copper sulfate | - |
| Food Red No. 102 | 0.015 g |
| Food Blue No. 1 | 0.003 g |
| SANMELIN 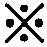 AO-1007 * (preparation containing 15% of enzymatically modified isoquercitrin) | - |
| Total, made up with water (100 % by weight) | 1000.0 ml |

### Example 2

| | |
|---|---|
| Fructose-glucose liquid sugar (KINGMART F-55) ¹⁾ | 130.0 g |
| Citric acid (crystals) ²⁾ | 2.0 g |
| Trisodium citrate ²⁾ | for adjusting to pH 3.0 |
| Magnesium chloride | 0.01 g |
| Copper sulfate | 0.01 g |
| Food Red No. 102 | 0.015 g |
| Food Blue No. 1 | 0.003 g |
| SANMELIN 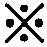 AO-1007 * (preparation containing 15% of enzymatically modified isoquercitrin) | - |
| Total, made up with water (100 % by weight) | 1000.0 ml |

### Example 3

| | |
|---|---|
| Fructose-glucose liquid sugar (KINGMART F-55) ¹⁾ | 130.0 g |
| Citric acid (crystals) ²⁾ | 2.0 g |
| Trisodium citrate ²⁾ | for adjusting to pH 3.0 |
| Magnesium chloride | 0.01 g |
| Copper sulfate | 0.01 g |
| Food Red No. 102 | 0.015 g |
| Food Blue No. 1 | 0.003 g |
| SANMELIN 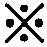 AO-1007 * (preparation containing 15% of enzymatically modified isoquercitrin) | 1.0 g |
| Total, made up with water (100 % by weight) | 1000.0 ml |

Colored syrups (examples 1 to 3) were prepared following the above recipes. After irradiating with 100 Langleys of light using a fade meter (Xenon Long Life Fade Meter XWL-75R, made by Suga Test Instruments Co., Ltd.), upon checking visually, it was observed that fading had clearly been promoted for the sample to which magnesium chloride and copper sulfate had been added, but fading by these metal salts has been suppressed for the sample to which SANMELIN 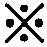 AO-1007 had been added.

### Examples 4 and 5: Sports drinks

Sports drinks were prepared using enzymatically modified isoquercitrin or Chinese bayberry extract to stabilize tar colorants therein. Specifically, materials were mixed together following each of the two recipes below (examples 4 and 5), and each mixture was filtered, and then hot packed into a 500 mL PET bottle, whereby each of two sports drinks was prepared.

| | | Example 4 | Example 5 |
|---|---|---|---|
| 1. | Sugar | 4.00(kg) | 4.00(kg) |
| 2. | Fructose-glucose liquid sugar | 3.00 | 3.00 |
| 3. | Medium-grain citric acid (anhydrous)* | 0.2 | 0.2 |
| 4. | Fine-grain trisodium citrate* | 0.085 | 0.085 |
| 5. | L-ascorbic acid (crystals)* | 0.1 | - |
| 6. | Common salt | 0.065 | 0.065 |
| 7. | Potassium chloride (made by Tomita Pharmaceutical Co. ,Ltd.) | 0.038 | 0.038 |
| 8. | Calcium lactate (made by Taihei Chemical Industrial Co., Ltd.) | 0.015 | 0.015 |
| 9. | Magnesium chloride (made by Tomita Pharmaceutical Co. ,Ltd.) | 0.005 | 0.005 |
| 10. | Grapefruit flavoring* | 0.13 | 0.13 |
| 11. | Food Yellow No. 4* | 0.0015 | 0.0015 |
| 12. | Food Blue No. 1* | 0.0005 | 0.0005 |
| 13. | SANMELIN 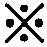 AO-1007 * (preparation containing 15% of enzymatically modified isoquercitrin) | 0.1 | - |
| 14. | SANMELIN 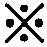 Y-AF * (preparation containing 3% of myricitrin) | - | 0.1 |
| Total, made up with water | | 100.00L | 100.00L |

### Examples 6 and 7: Drink jellies

Drink jellies (examples 6 and 7) were prepared following the recipes below using enzymatically modified isoquercitrin or Chinese bayberry extract to stabilize tar colorants therein. Specifically, while stirring water and component 2 together, a powdered mixture of components 1, 4, 6, 8 and 9 was added, and dissolved in by stirring for 10 minutes at 80°C. Next, the other components were added in order and the amount was made up to the total, and then each mixture was filled into a 200 mL transparent polyester pouch, and sterilized for 30 minutes at 85°C, whereby drink jellies were prepared.

| | | Example 6 | Example 7 |
|---|---|---|---|
| 1. | Sugar | 5.00(kg) | 5.00(kg) |
| 2. | Fructose-glucose liquid sugar | 10.00 | 10.00 |
| 3. | 4xconcentrated muscat juice (clear) (made by Kotobuki High-Land Food Co., Ltd.) | 1.25 | 1.25 |
| 4. | Processed starch (TK-16 made by Matsutani Chemical Industry Co,. Ltd.) | 8.5 | 8.5 |
| 5. | Calcium lactate (made by Taihei Chemical Industrial Co., Ltd.) | 0.1 | 0.1 |
| 6. | Trisodium citrate F * | 0.1 | 0.1 |
| 7. | Citric acid (anhydrous) N * | 0.25 | 0.25 |
| 8. | GEL UP 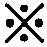 K-S * (gelling agent) * | 0.3 | 0.3 |
| 9. | GEL UP 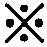 SA-3C * (gelling agent) * | 0.1 | 0.1 |
| 10. | Raspberry flavoring * | 0.1 | 0.1 |
| 11. | Food Red No. 40 * | 0.002 | 0.002 |
| 12. | SANMELIN 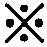 AO-1007 * (preparation containing 15% of enzymatically modified isoquercitrin) | 0.2 | - |
| 13. | SANMELIN 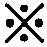 Y-AF * (preparation containing 3% of myricitrin) | - | 0.2 |
| Total, made up with water | | 100.00kg | 100.00kg |

### Examples 8 and 9: Candies

Candies (examples 8 and 9) were prepared following the recipes below using enzymatically modified isoquercitrin or Chinese bayberry extract to stabilize tar colorants therein. For each of the examples, components 1, 2 and 15 were first mixed together, and the mixture was boiled down at 190°C, and then the mixture was cooled to 120°C, the other components were dissolved in order, and molding was carried out, whereby each of the two candies (examples 8 and 9) was prepared.

| | Example 8 | Example 9 |
|---|---|---|
| 1. Powdered Parachinit PNP (made by Mitsui Sugar Co., Ltd.) | 90.2kg | 90.2kg |
| 2. Amalty syrup (made by Towa Chemical Industry Co., Ltd.) | 16.3 | 16.3 |
| 3. Sucralose * | 0.04 | 0.04 |
| 4. Citric acid (anhydrous) F * | 1.00 | 1.00 |
| 5. Passion fruit juice powder no. 16786* | 0.5 | 0.5 |
| 6. SAN YELLOW 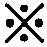 No. 3L * | 0.05 | 0.05 |
| 7. SAN RED 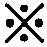 No. 5A * | 0.005 | 0.005 |
| 8. L-ascorbic acid (crystals) * | 0.5 | 0.5 |
| 9. Food Yellow No. 5 * | 0.001 | 0.001 |
| 10. Food Yellow No. 4 * | 0.0005 | 0.0005 |
| 11. Food Red No. 2 * | 0.0002 | 0.0002 |
| 12. Orange flavoring * | 0.2 | 0.2 |
| 13. SANMELIN 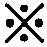 AO-1007 * (preparation containing 15% of enzymatically modified isoquercitrin) | 0.2 | - |
| 14. SANMELIN 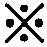 Y-AF * (preparation containing 3% of myricitrin) | - | 0.2 |
| 15. Water | 30.00 | 30.00 |
| Yield (prepared by boiling down) | ca.100.0kg | ca.100.0kg |

### INDUSTRIAL APPLICABILITY

Although tar colorants (synthetic colorants) are said to have high stability in general, the present inventors newly discovered that there is a problem with use among compositions containing a reducing sugar, an ascorbic acid compound, or a metal, in that fading occurs markedly upon irradiation with light in particular, and moreover this fading phenomenon is more marked the lower the amount of the tar colorant in the composition; the present inventors thus developed a method of resolving this problem. The present invention relates to this method.

As a reducing sugar, fructose-glucose liquid sugar, which is manufactured for example by producing glucose from starch through acid or enzymatic hydrolysis and then using an isomerase, has an advantage of being excellent as a sweetener in soft drinks and frozen desserts, due to having a good refreshing sweetness, having an improved degree of sweetness at low temperature, and giving a strong refreshing sensation, as compared with sucrose. In Japan and so on, fructose-glucose liquid sugar is also cheaper than sucrose, and hence is used in large quantities as with sucrose in the food industry.

Regarding ascorbic acid compounds and metals, due to foods/drinks becoming more health-orientated in recent years, many foods/drinks having vitamins such as ascorbic acid added thereto so that these vitamins can be readily ingested have appeared on the market, and at the same time foods/drinks having iron, calcium and so on added thereto so that these minerals can be ingested have appeared on the market.

Moreover, among various foods/drinks, there are many products in which natural fruit juices are used, and in the case of such foods/drinks, reducing sugars such as fructose are generally contained in large amounts in the fruit juice, and moreover it is not uncommon for ascorbic acid compounds and/or minerals to be further contained.

The present inventors found that these substances, i. e. reducing sugars, ascorbic acid compounds, and metals, that are useful in compositions such as foods/drinks act to accelerate fading of tar colorants.

With foods/drinks, and also various other products such as cosmetics and medicines, that are colored with tar colorants, there is thus a risk of fading in the case of being exposed to sunlight while on display in a shop window or the like. This risk is increased in particular in the case of products in transparent containers such as PET bottles and glass bottle. If marked fading is observed with such products, then the commercial value thereof will be lost, and hence there will be great damage tomanufacturers, distributors and retailers.

Moreover, to shut out light completely by packaging to suppress fading of tar colorants, an aluminum sheet or the like must be used, resulting in an increase in the product cost. Furthermore, with products packaged so as to shut out light completely, one can no longer hope for an effect whereby the contents are shown to consumers and the distinctive product characteristics can be seen.

If the present invention is used, then a tar colorant fading phenomenon that occurs in compositions that contain at least one selected from the group consisting of reducing sugars, ascorbic acid compounds, and metals in addition to the tar colorant, in particular a tar colorant fading phenomenon that occurs through irradiation with light, can be suppressed. The commercial value of a product can thus be sustained for a longer period, without great investment in packaging, and for products for which there is visual appeal of distinctive product characteristics such as the color and form of the contents to consumers. In this sense, it is believed that the present invention will contribute greatly in the food, cosmetic and medicine industries and so on.

## Claims

1. A method of suppressing fading of a tar colorant for a composition containing (a) thetarcolorant, and (b) at least one selected from the group consisting of reducing sugars, ascorbic acid compounds, and metals, the method comprising:
mixing (c) at least one selected from the group consisting of isoquercitrin, enzymatically modified isoquercitrin, rutin, enzymatically modified rutin, Chinese bayberry extract, and rosemary extract into the composition,
thus making the component (a), the component (b) and the component (c) coexist.

2. The method according to claim 1, being a method of suppressing fading of the tar colorant through irradiation with light.

3. The method according to claim 1, wherein the composition is an orally-available composition.

4. The method according to claim 1, wherein the composition is a food/drink.

5. The method according to claim 1, wherein the tar colorant is at least one selected from the group consisting of Red No. 2, Red No. 40, Red No. 102, Yellow No. 4, Yellow No. 5, azorubin, Red No. 3, Red No. 104, Red No. 105, Red No. 106, Green No. 3, Blue No. 1, Blue No. 2, and Yellow No. 203.

6. The method according to claim 1, wherein each of the reducing sugars is fructose, glucose, arabinose, galactose, xylose, sorbose, mannose, ribose, rhamnose, kojibiose, nigerose, maltose, isomaltose, gentiobiose, laminaribiose, cellobiose, lactose, melibiose, maltotriose, panose, isomaltotriose, liquid sugar, fructose-glucose liquid sugar, invert sugar, starch syrup, honey, or maple sugar.

7. The method according to claim 1, wherein each of the ascorbic acid compounds is ascorbic acid, analkalimetalsaltofascorbic acid, an alkaline earth metal salt of ascorbic acid, a fatty acid ester of ascorbic acid, erythorbic acid, or an alkali metal salt of erythorbic acid.

8. The method according to claim 1, wherein each of the metals is iron, copper, tin, calcium, aluminum, zinc, magnesium, or lead.

9. The method according to claim 1, wherein the proportion of the tar colorant in the composition is 0.0001 to 0.1 % by weight.

10. The method according to claim 1, wherein the composition contains a reducing sugar, the total proportion of the reducing sugar in the composition is 1 to 40 % by weight.

11. The method according to claim 1, wherein the composition contains an ascorbic acid compound, the total proportion of the ascorbic acid compound in the composition is 0.001 to 0.1 % by weight.

12. The method according to claim 1, wherein the composition contains a metal, the total proportion of the metal in the composition is 0.0001 to 0.01 % by weight.

13. The method according to claim 1, wherein at least one selected from the group comprising isoquercitrin, enzymatically modified isoquercitrin, rutin, and enzymatically modified rutin is mixed in such that the total concentration thereof in the final composition is 0.0005 to 0.5 % by weight, or wherein at least one selected from the group comprising Chinese bayberry extract and rosemary extract is mixed in such that the total concentration in terms of solids thereof in the final composition is 0.0001 to 0.2 % by weight.

14. A composition containing:
(a) a tar colorant;
(b) at least one selected from the group consisting of reducing sugars, ascorbic acid compounds, and metals; and
(c) at least one selected from the group consisting of isoquercitrin, enzymatically modified isoquercitrin, rutin, enzymatically modified rutin, Chinese bayberry extract, and rosemary extract.

15. The composition according to claim 14, wherein the composition is an orally-available composition.

16. The composition according to claim 14, wherein the composition is a food/drink.

17. The composition according to claim 14, wherein the tar colorant is at least one selected from the group consisting of Red No. 2, Red No. 40, Red No. 102, Yellow No. 4, Yellow No. 5, azorubin, Red No. 3, Red No. 104, Red No. 105, Red No. 106, Green No. 3, Blue No. 1, Blue No. 2, and Yellow No. 203.

18. The composition according to claim 14, wherein each of the reducing sugars is fructose, glucose, arabinose, galactose, xylose, sorbose, mannose, ribose, rhamnose, kojibiose, nigerose, maltose, isomaltose, gentiobiose, laminaribiose, cellobiose, lactose, melibiose, maltotriose, panose, isomaltotriose, liquid sugar, fructose-glucose liquid sugar, invert sugar, starch syrup, honey, or maple sugar.

19. The composition according to claim 14, wherein each of the ascorbic acid compounds is ascorbic acid, an acid alkali metal salt of ascorbic, an alkaline earth metal salt of ascorbic acid, a fatty acid ester of ascorbic acid, erythorbic acid, or an alkali metal salt of erythorbic acid.

20. The composition according to claim 14, wherein each of the metals is iron, copper, tin, calcium, aluminum, zinc, magnesium, or lead.

21. The composition according to claim 14, containing the tar colorant in a proportion of 0.0001 to 0.1 % by weight.

22. The composition according to claim 14, wherein the composition contains a reducing sugar, the total proportion of the reducing sugar in the composition is 1 to 40 % by weight.

23. The composition according to claim 14, wherein the composition contains an ascorbic acid compound, the total proportion of the ascorbic acid compound in the composition is 0.001 to 0.1 % by weight.

24. The composition according to claim 14, wherein in the composition contains a metal, the total proportion of the metal in the composition is 0.0001 to 0.01 % by weight.

25. The composition according to claim 14, which comprises at least one selected from the group comprising isoquercitrin, enzymatically modified isoquercitrin, rutin, and enzymatically modified rutin in a total proportion of 0.0005 to 0.5 wt%, or comprises at least one selected from the group comprising Chinese bayberry extract and rosemary extract in a total proportion in terms of solids of 0.0001 to 0.2 wt%.

26. The composition according to claim 14, for which fading of the tar colorant that may occur through irradiation with light is suppressed.

27. The composition according to claim 14, for which light-fastness of the tar colorant is improved.
